## Europäisches Patentamt
## European Patent Office
## Office européen des brevets

(11) Numéro de publication: **0 081 460**
**B1**

(12) **FASCICULE DE BREVET EUROPEEN**

(45) Date de publication du fascicule du brevet:
26.02.86

(21) Numéro de dépôt: 82810513.0

(22) Date de dépôt: **30.11.82**

(51) Int. Cl.⁴: **D 04 H 11/04**

(54) Procédé pour recouvrir un substrat de fils soudés par ultrasons et machine pour la mise en oeuvre de ce procédé.

(30) Priorité: 03.12.81 CH 7728/81

(43) Date de publication de la demande:
15.06.83 Bulletin 83/24

(45) Mention de la délivrance du brevet:
26.02.86 Bulletin 86/9

(84) Etats contractants désignés:
IT

(56) Documents cités:
DE - A - 2 426 625
FR - A - 2 009 069
US - A - 3 900 354

(73) Titulaire: **SIRS - SOCIETE INTERNATIONALE DE REVETEMENTS DE SOL S.A., 20 Boulevard du Parc, F-92521 Neuilly sur Seine (FR)**

(72) Inventeur: **Zurcher, Erwin, Avenue du Lignon 21, CH-1219 Le Lignon (CH)**
Inventeur: **Cottenceau, Rémi, Les Hameaux de la Côte La Côte, F-74580 Viry (FR)**

(74) Mandataire: **Dousse, Blasco et al, 7, route de Drize, CH-1227 Carouge/Genève (CH)**

LIBER, STOCKHOLM 1986

## Description

La présente invention se rapporte à un procédé pour reoouvrir un substrat, de fils soudés par ultrasons, ces fils et ce substrat étant au moins partiellement en matériau thermoplastiquer et à une machine pour la mise en oeuvre de ce procédé.

On a déjà proposé dans le brevet CH-A-58O 496 un procédé de fabrication d'une étoffe à poils selon lequel une nappe de fils parallèles est conformée successivement en rangées de boucles que l'on fixe au fur et à mesure à la surface d'un support en faisant fondre localement la matière des fils et du support dans leur zone de contact en les pinçant entre une surface d'appui et une sonotrode mise en vibratjcns acoustiques à une fréquence et à une amplitude aptes à faire fcndre le matériau thermoplastique. Selon ce procédé on plisse la nappe de fils à l'aide d'un mécanisme animé d'un mouvement alternatif qui se superpose au défilement du support. Ce mécanisme comporte une matrice munie d'une pluralité de tubes de guidage des fils, alignés transversalement au sens de défilement du support, et montés pour se déplacer selon un mouvpment de va-et-vient dans un plan perpendiculaire à celui du déplacement relatif entre une sonotrode de soudage et une surface d'appui de soudage, de manière à former des séries de boucles successives paralleles dressées sur le support, dont les bases sont soudées au fur et à mesure à la surface de ce support dans leurs zones adjacentes à ce support.

Un des principaux inconvénients de cette solution provient de l'alignement des rangles de bcucles sur le support qui n'est pas souhaitable dans le cas d'un tapis parce qu'il confè un moins bon pouvoir couvrant du support et rend les raccords plus difficiles à réaliser étant donné que si les rangées ne sont pas mises parfaitement vis-à-vis les unes des autres, la ligne de raccordement devient extrêmement distincte. La présente invention a pour but de remédier au moins en partie aux inconvénients susmentionnés.

A cet effet, la présente invention a tout d'abord pour objet un procédé pour recouvrir un substrat, de fils soudés par ultrasons, ces fils et ce substrat étant au moins partiellement en matériau thermoplastique, selon lequel cn place ce substrat vis-à-vis d'une sonotrode de soudage, on amèe des portions desdits fils en contact avec la portion de ce substrat placée vis-à-vis de cette sonotrode, on presse ces portions de substrat et de fils en contact contre la sonotrode reliée à une source d'excitation pour leur transmettre les variations de pressions ultrascniques aptes à créer entre elles une fusion localisée et on relàche cette pression pour déplacer le substrat et effectuer un soudage d'une autre portion de ces fils sur une autre porticn de sa surface et ainsi de suite jusqu'à recouvrement du substrat. Ce procédé est caractérisé par le fait que l'on dispose ladite sonotrode adjacente au revers du substrat, que l'on fait passer chacun desdits fils à travers un conduit de guidage dont l'extrémite de sortie comporte, une surface d'appui faisant face à la sonotrode, que l'on anime ces conduits de guidage de mouvements alternatifs selon une directicn sensiblement perpendiculaire à la face des transmisson des vibrations de la sonotrode pour amener, ces surfaces d'appui périodiquement en contact elastique avec la portion de l'avers du substrat passant sur ladite face de transmissicn de vibration de la sonotrode afin d'appliquer cette portion du substrat et celle de chacun desdits fils sortant des extrémités respectives desdits conduits contre ladite sonotrode.

Cette invention a également pour objet une machine pour la mise en ceuvre de ce procédé, comprenant des moyens pour faire défiler le substrat, une matrice de conduits de guidage de fils, cette matrice de conduits de guidage étant disposée transversalement à la direction de defilement de ce substrat et étant en prise avec des moyens de guidage definissant une translation de cette matrice et avec des moyens d'entraîment pour l'animer d'un mouvement de va et vient par rapport aux moyens de guidage et amener successivement les extrémités de sortie des conduits de guidage à proximité d'une portion du substrat, et un poste de soudage comprenant une sonotrode et des moyens d'appui, qui sont disposés de part et d'autre de cette portion du substrat, et des moyens d'excitation de cette sonotrode pour la faire vibrer à une fréquence acoustique apte à chauffer le materiau thermoplastique à sa température de fusion lorsqu'il est pressé entre cette sonotrode et ces moyens de support, caractérisée par le fait que ces moyens de guidage en translation sont orientés perpendiculairement à la surface d'application des vibrations acoustiques de la sonotrode et que lesdits moyens d'appui scnt formés de surfaces d'appui situées aus extrétés de sortie desdits conduits de guidage respectifs, qui sont montes sur ladite matrice par l'intermédiaire d'éléments élastiques de suspension agissant au moins dans le sens de course de la matrice amenant ces surface d'appui contre la surface de transmission des vibrations de la sonotrode.

L'avantage de ce procédé reside dans le fait qu'il permet de choisir individuellement sur le substrat les zones de soudage de chaque fil, oe qui n'est pas possible avec le procédé existant, qui ne peut produire que des boucles alignées transversalement au substrat. Le procédé objet de l'invention permet donc de réaliser un produit dont l'aspekt est particuliérement plaisant et qui ne différe en rien du tapis "tufté" habituel, mais qui permet, par rapport au tapis "tufté" de réaliser une importante économie de matière première, qui peut être évaluée à environ 20% de fil. Le procédé n'est pas seulement limité à du tapis moquette. Il est possible de couvrir des substrats de fils pour réaliser des revêtements de murs ou pour toutes sortes d'applications, par exemple dans le domaine du géotextile. A ce sujet, le terme de fils utilisé ici, n'est pas limité au fil cbtenu par filature de fibres coupées, mais également à des filaments extrudés et textures, des crins ou des monofilaments de gros diamètre nar exemple de l'ordre du millimètre.

Le dessin annexé illustre, très schématiquement et à titre d'exemple, une forme d'exécution et des variantes de machines pour la mise en oeuvre du procé objet de l'invention, ainsi que divers produits obtenus.

La fig. 1 est une vue en perspective de cette forme d'exécution.

La fig. 2 est une vue en plan d'un détail de la fig. 1.

La fig. 3 est une vue en coupe selon la ligne III-III de la fig.2.

La fig. 4 est une vue en élévation latérale d'une variante de la fig. 1.

La fig. 5 est un vue en perspeotive d'une variante de la fig.1.

La fig. 6 est une vue en élévation partielle d'une autre variante.

La fig. 7 est une vue en élevation partielle d'une autre variante.

Les figs 8 et 9 sont des vues en plan des produits obtenus avec la variante de la fig. 5.

La fig. 10 est une vue en perspeotive partielle d'une autre variante.

La fig. 11 est une vue en perspective agrandie sous un angle différent d'un détail de la fig. 10.

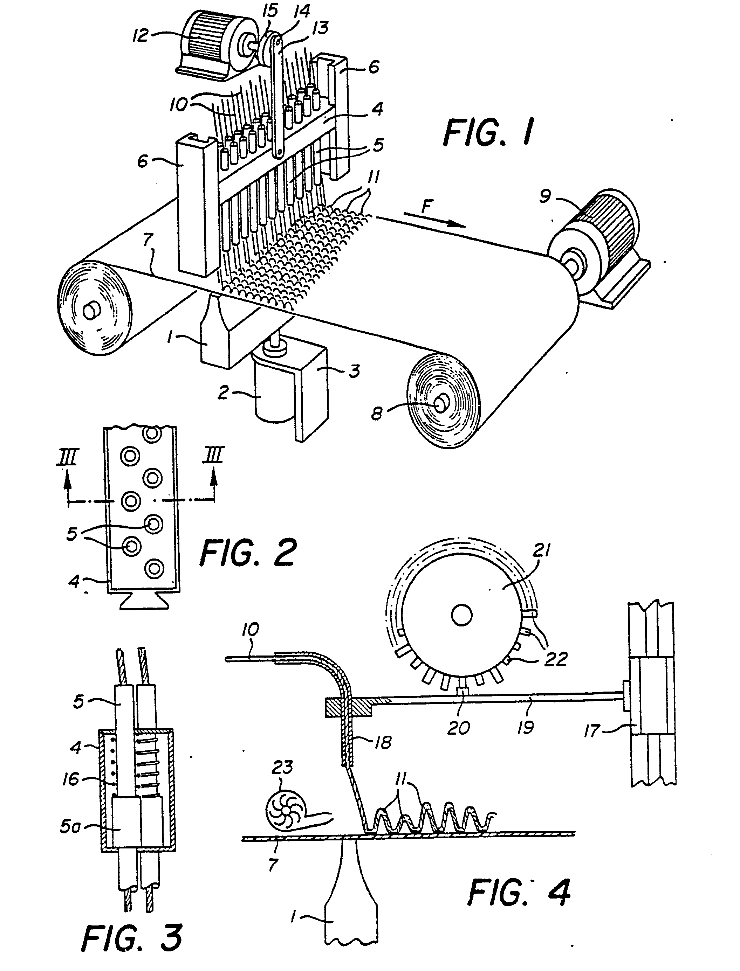

La machine illustrée par la fig. 1 comporte une sonotrode 1 reliée à un générateur de vibration 2 comprenant un transduoteur (non représenté) le tout étant supporte par une potence fixe 3. Une matrice 4 de tubes 5 est montée ooulissante entre deux coulisses parallèles 6, les axes longitudinaux des tubes s'étendant parallèelement aux coulisses 6 et perpendiculairement à un substrat constitué par une feuille support 7, généralement constitué par un non-tissé ou un tissu au moins partiellement en matériau thermoplastique, sur laquelle des boucles doivent être soudées pour former un tapis du type moquette. Un rouleau récepteur 8 associe à un moteur d'entraînement 9 sert à faire défiler la feuille support 7 entre la sonotrode 1 et les extrémités de sortie des tubes, dans le sens de la flèche F. Les extrémités d'entrée de ces tubes 5 reçoivent les fils respectifs 10 destinés à former des boucles 11 à la surface de la feuille support 7. Ces fils 10 sont au moins partiellement en un matéeriau thermoplastique et proviennent de bobines d'alimentation (non représentées). Comme illustre par la fig. 3, chaque tube 5 présente une collerette 5a disposée à l'intérieur de la matrice 4, et un ressort 16, appuyant oontre cette oollerette 5a et oontre la paroi supérieure de la matrice 4, presse élastiquement les tubes 5 en direction de la feuille support 7. Ces ressorts 16 sont calibrés pour assurer des pressions uniformes sur tous les fils 7 soudés en même temps.

La matrice 4 de tubes est reliée à un moteur d'entraînement 12 par une bielle 13 dont une extrémite est articulée au centre de la matrice 4 et dont l'autre extrémité est articulée à un excentrique 14, solidaire d'une roue d'entraînement 15, calée sur l'arbre de sortie du moteur 12. Ce préférence, les tubes sont fixés dans la matrice 4 de façon à ne pas etre tous alignés sur un même axe transversal par rapport à la direction de défilement de la feuille support 7, comme on le voit en particulier sur la fig. 2. Etant donné que le soudage des fils respectifs résulte du serrage de ces fils entre le bord de l'extrémité de sortie de chaque tube et la feuille support 7, elle-même serrée contre la sonotrode 1 qui leur communique ses vibrations, il en résulte que les boucles 11 seront décalées les unes par rapport aux autres dans le sens transversal exactement selon la disposition des tubes 5 sur la matrice 4. Bien entendu, la disposition illustrée par la fig. 2 n'est en rien limitative et on peut évidemment en choisir d'autres.

Le cycle de formation et de fixation d'une rangée de boucles 11 comporte le soulèvement de la matrice 4 de tubes 5 par la bielle 13. Il en résulte un coulissement des tubes 5 par rapport aux fils respectifs précédemment soudés sur la feuille support 7. Ensuite, la matrice 4 de tubes 5 revient vers cette feuille support 7 qui a avancé d'un pas correspondant à l'écartement des extrémités des bouclettes 11, rattachées à la feuille support et applique élastiquement les extrémités de sortie de ces tubes 5, la course de la matrice 4 étant légèrement supérieure à la distance séparant les extrémités de sortie des tubes, de la feuille support 7, la différence est absorbée par les ressorts 16, associés aux tubes 5. Ceci permet d'assurer le contact entre le fil 10 à souder, la portion de la feuille support 7 à laquelle le fil 10 est soudé, et la sonotrode 1, durant une fraction de seconde de l'ordre du dizième de seconde qui est suffisante pour obtenir le soudage entre la feuille suppport 7 et le fil 10 par l'application de vibrations ultrasonores communiquées par la sonotrode 1. Cette durée, qui peut varier de quelques centièmes à quelques dizièmes de secondes, et la pression peuvent être réglées en adaptant la pression du ressort et la course des tubes 5, ceci notamment en fonction de la nature du titre des fils ou filaments élémentaires ainsi que de la nature du substrat.

La variante illustrée par la fig. 4 montre une matrice 17 de tubes 18 reliés chacun à la matrice 17 par un bras élastique 19 qui présente un élément de butée 20 s'étendant perpendiculairement à l'axe longitudinal du bras élastique 19, parallèlement à la direction de coulissement de la matrice 17. Un organe de sélection rotatif 21, muni d'une série de palettes radiales 22, de longueurs différentes, est relié au mécanisme d'entraînement de la machine (non représenté) pour avancer d'un pas à chaque tour de la rcue d'entraînement de la matrice 17. Une telle roue d'entraînement correspond à la roue 15 de la fig. 1.

Un ventilateur 23 est disposé vis-à-vis de la trajectoire que le fil 10 forme entre la sortie des tubes 18 et la feuille support 7. Ce ventilateur sert à garantir que les boucles de fil 11 se forment toujours dans le même sens lors de la course descendante des tubes 18. Lors de la course ascendante du mouvement alternatif de la matrice 17, les butées 20 rencontrent les palettes radiales 22, limitant la course des tubes 18 respectifs et par conséquent, l'importance du coulissement entre les tubes 18 et les fils 10 respectifs. Il s'ensuit que lorsque les tubes 18 sont ramenés en direction de la feuille support 7 pour former les boucles 11, la valeur du coulissement entre ces tubes et les fils 10 définit la hauteur des boucles 11. Par une programmation adéquate de chaque tube 18 individuellement, il est ainsi possible de réaliser des motifs en relief à la surface de la feuille support 7. Ceci constitue un avantage supplémentaire de la machine selon l'invention, étant donné que la moquette avec motifs en relief constitue une proportion importante du marché. On relève aussi la très grande simplicité des moyens de mise en oeuvre quand bien même la machine selon l'invention présente de notables améliorations par rapport à celles de l'état de la technique. Bien entendu, il est également possible de faire usage des mécanismes utilisés couramment pour faire des boucles de hauteurs différentes sur les machines à "tufter" tels que les mécanismes à lecture photo-électrique par exemple.

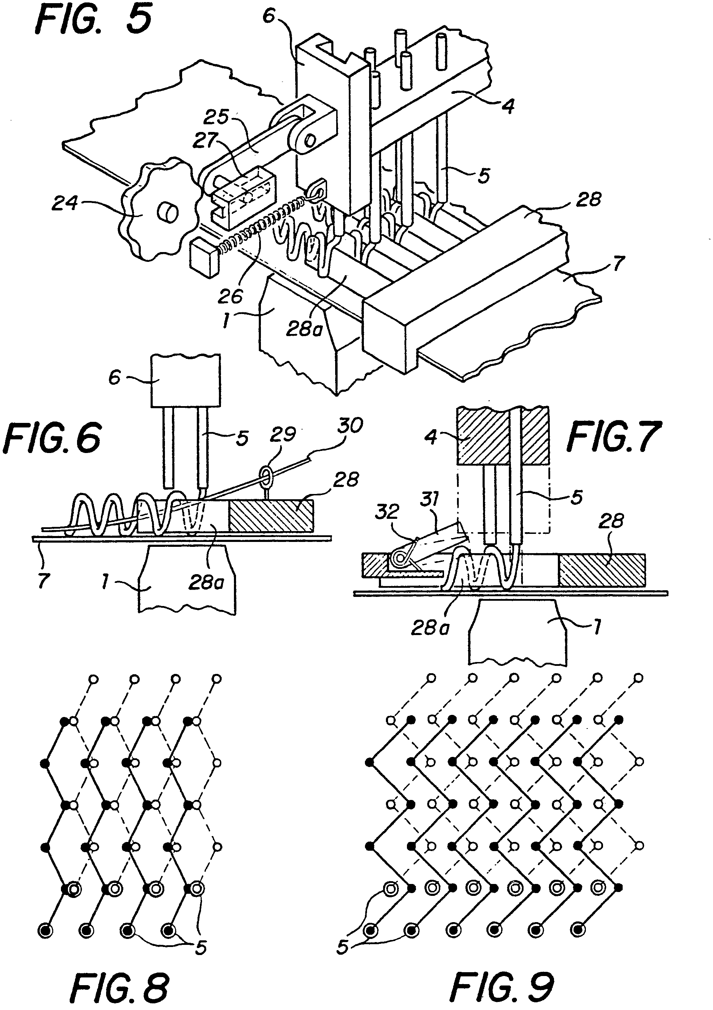

La variante illustrée par le fig. 5 se rapporte à un mécanisme selon lequel la matrice 4 de tubes 5 est non seulement animée d'un mouvement de va-et-vient vertical comme dans le cas de la fig. 1, mais encore d'un mouvement de va-et-vient transversal au substrat 7. A cet effet, une came circulaire 24 est montée rotativement autour d'un axe parallèle à l'axe longitudinal du substrat 7. Un palpeur 25 est appliqué contre cette came 24 par un ressort 26. Ce palpeur est articulé à la coulisse 6 et son extremité voisine de la came 24 est guidée dans un rail 27 s'étendant horizontalement, dans une direction transversale au substrat 7. La came circulaire 24 est synchronisée par des moyens de transmission (non représentés) avec la bielle 13 (illustrée par la fig. 1) de manière à déplacer transversalement la coulisse 6 alternativement dans un sens et dans l'autre entre deux soudures successives d'un même fil.

Un peigne 28 est placé transversalement au substrat 7 avec des dents 28a formées de lamelles verticales et dont l'écartement correspond à celui des tubes 5 de la matrice 4. Ces dents 28a se trouvent au milieu de la course transversale de chaque tube, de sorte que la soudure d'un même fil a lieu alternativement de part et d'autre d'une même dent 28a. Cette variante permet de réaliser des dessins variés suivant la disposition des tubes 5, l'amplitude du déplacement transversal et la vitesse relative du substrat. Deux exemples de ces dessins sont illustrés par les figs 8 et 9. Sur ces figures, on a represente en trait épais la disposition en double rang de la matrice de tubes 5 au départ et en traits continus, respectivement interrompus, les fils issus des tubes de l'une et l'autre rangée. Bien entendu, le peigne illustré par la fig. 5 peut également être utilisé avec le mécanisme de la fig. 1, les dents du peigne servant alors à éviter que les boucles d'une ligne longitudinale n'empiètent dans les lignes adjacentes.

Il faut encore signaler qu'il est possible également d'utiliser le procédé décrit, en particulier la variante de la fig. 5, pour fixer des fils sur un substrat sans former de boucles, mais en maintenant constamment les fils contre le substrat. Il suffit à cet effet de supprimer les dents 28a du peigne 28 et de faire coïncider l'amplitude du mouvement vertical de la matrice 4 avec l'avance du substrat de manière à tirer les fils parallèlement à la surface. Par cette technique il est possible de réaliser, par exemple, des revetements de murs.

La fig. 6 montre une autre variante de la fig. 5. On reconnaît sur cette variante la coulisse 6, les tubes 5, le peigne 28 avec ses dents 28a, le substrat 7 et la sonotrode 1. Le peigne 28 porte des oeillets 29 pour guider des fils 30 qui sont insérés longitudinalement sous les boucles formées par le mouvement transversal des tubes 5 de part et d'autre des dents 28a.

La fig. 7 illustre une variante dans laquelle les boucles sont formées au-dessus des dents 28a d'un peigne 28 comme dans le cas de la fig. 5. Chaque dent 28a de ce peigne porte un couteau 31 asscié à un ressort de rappel 32. Chaque fois que la matrice 4 de tubes 5 s'abaisse pour mettre en contact un fil avec le substrat 7 et la scnotrode 1, le couteau 31 est abaissé et il coupe la boucle du fil précédemment formée au-dessus de la dent 28a.

Les essais réalisés à l'aide du procédé selon l'invention ont montré que l'on peut souder diverses matières thermoplastiques ensemble. Par exemple, un substrat de polypropylène avec un fil de polypropylène, un substrat de polyamide 6 avec un fil de polyamide 6, un substrat de polyamide 6 avec un fil de polypropylène. Bien entendu, ce qui importe est la nature de la matière intervenant directement dans le soudage. Ceci n'empêche évidemment pas d'utiliser des filaments bicomposants comportant une gaine en polyamide 6 et une âme en polyester comme il en existe dans le commerce. Ce même, il est également possible de recouvrir une face d'un matériau non-thermoplastique, tel qu'une toile de jute avec un revetement d'une matière thermoplastique appropriée au fil que l'on veut souder à sa surface. On peut également revêtir un substrat d'un matériau thermoplastique par un matériau thermoplastique du même type ou d'un type différent et présentant une bonne affinité avec le fil à souder. C'est ainsi que l'on peut ajouter un matériau en poudre sur un substrat non tissé par exemple pour augmenter l'épaisseur de ce substrat.

Bien que l'on ait représenté aux figs 8 et 9 des dessins obtenus à partir de matrices dans lesquelles les tubes sont répartis sur deux rangées parallèles transversales au substrat, pour obtenir des croisements de fils, il est évidemment possible de réaliser des dessins à partir d'une ou plusieurs matrices indépendantes à une seule rangée de tubes animés de mouvements alternatifs transversaux au sens d'avance du substrat, de manière à former des lignes brisées.

Lors du soudage de fils formés de multifilaments extrudés à travers une filière à buses multiples, étant donné que les filaments ne sont pas liés les uns aux autres comme dans un fil de filature, ces filaments sont susceptibles de s'étaler plus ou moins à l'endroit de la soudure. On a constaté que les soudures des fils à multifilaments réalisées avec les formes d'exécutions des machines illustrées par les figs 1 à 7 présentent une bonne résistance à la traction, de l'ordre de 6 mN, mais par contre, se comportent beaucoup moins bien vis-à-vis du test de "boulochage" après lequel on constate quu'ne proportion importante de filaments ont été arrachés. Un tel défaut rend le produit obtenu pratiquement impropre à la réalisation de revêtements de sol.

Différents essais ont été réalisés pour essayer de remédier à cet inconvénient. C'est ainsi que l'on a incliné l'axe longitudinal des tubes par rapport à la sonotrode 1. Lorsque cette inclinaison était choisie pour que la partie du bord du tube sur laquelle passe le fil en sortant, touche le substrat en premier, on a constaté une augmentation de la résistance à la traction de la soudure, mais un effet de "boulochage" inchangé. En donnant à ce tube une inclinaison symétrique par rapport à la verticale, la résistance à la traction diminue et l'effet de "boulochage" reste important.

L'examen au microscope de la soudure montre qu'en utilisant le bord des tubes 5 comme surface d'appui pour appliquer les fils contre le substrat 7 et la sonotrode 1, la forme de secteur annulaire de cette surface d'appui a pour effet d'empecher l'étalement des filaments du fil qui, comme on l'a dit, sont plus ou moins libres, seule la texturation du fil les réunissant, mais avec un certain degré de liberté. Comme le fil sort du tube en s'appuyant contre une surface concave et que la surface d'appui lors du soudage est formée d'un secteur annulaire de l'extrémité du tube, délimité précisément par cette surface concave, cette forme provoque une concentration des filaments sur la surface d'appui. Cette concentration de filaments fait que, le fil étant assimilable à un cylindre écrasé, il y a davantage de filaments au centre du secteur annulaire définissant la soudure que sur ses bords. Par conséquent, l'épaisseur de matière est plus importante au centre de ce secteur annulaire qu'aux bords de ce secteur. Conc la pression est inégale et, en particulier, les filaments situés vers les bords de ce secteur sont moins bien soudés au substrat, d'où l'important effet de "boulochage" constaté, malgré la bonne résistance de la soudure elle-même, testée par une traction sur l'ensemble du fil.

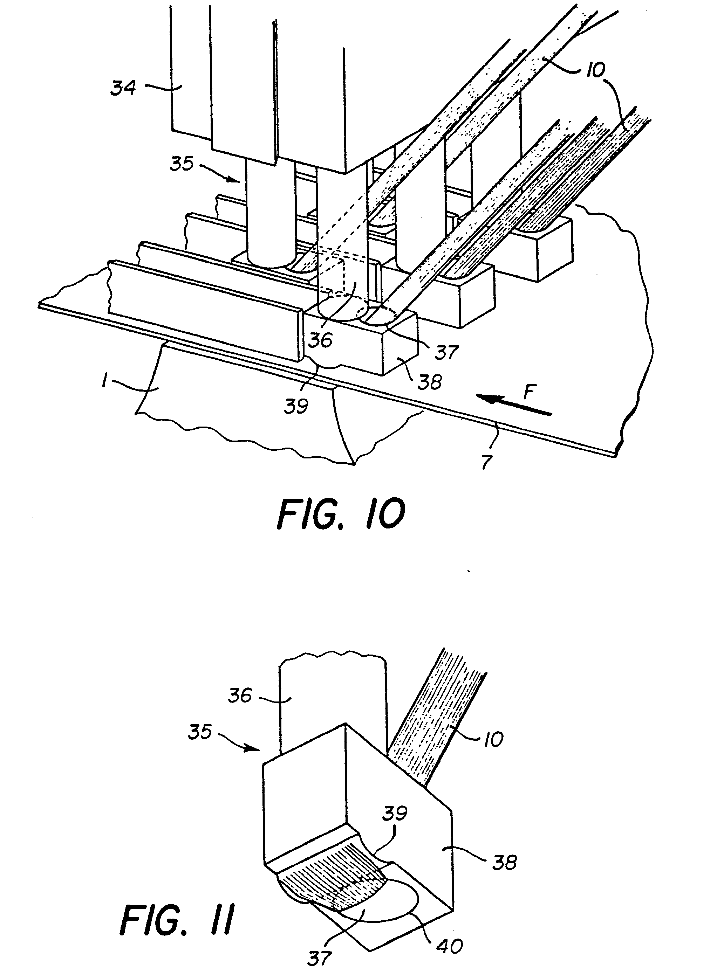

C'est ce défaut en particulier que propose de résoudre la variante illustrée par les figs 10 et 11.

On retrouve dans cette variante une matrice 34 munie d'une série de guides-fils 35 disposés alternativement sur deux rangées transversales à l'axe longitudinal du substrat 7. Ces guides-fils 35 ont le même rôle que les tubes 5 des fonmes d'exécutions précédentes. Ils présentent chacun une tige de guidage cylindrique 36 montée coulissante dans la matrice 34 et pressée élastiquement par un ressort (non représenté) comme illustré par la fig. 3. Simplement, dans ce cas, le fil 10 ne passe pas à travers la tige 34, mais à travers un conduit 37 qui traverse un bloc parallélépipédique 38 fixé à l'extrémité inférieue de la tige de guidage 36. Chacun des blocs parallélépipédique 38 est disposé entre deux dents 28a du peigne susmentionné. La face inférieure de chaque bloc parallélépipédique 38 présente une nervure rec tiligne 39 disposée transversalement au sens de défilement F du substrat 7 sensiblement tangente au bord de l'ouverture de sortie 40 du conduit 37 dans la face inférieure du bloc parallélépipédique 38, et faisant suite à cette ouverture de sortie 40 du conduit 37 par rapport au sens de défilement F du substrat 7. Cette nervure 39 est formée de préférence d'une demi-ellipse, dont le grand axe est parallèle à la face inférieure du bloc 38. On peut également utiliser une nervure à face plane bordée longitudinalement de deux arcs de cercles.

Cette nervure rectiligne 39 constitue la surface d'appui du fil 10 lors du soudage de ce fil contre le substrat 7, par application des portions du fil et du substrat à souder contre la sonotrode 1. Comme on le constate en observant la fig. 11, le fil à multifilaments 10 sortant du conduit 37 en s'appuyant contre la surface concave formée par un secteur de l'ouverture de sortie 40, passe immédiatement sur la nervure rectiligne 39 qui donne au fil 10 une inflexion convexe. Comme, par ailleurs, cette nervure 39 est rectiligne, les filaments du fil 10, qui présentent un certain degré de liberté entre eux du fait qu'ils ne sont pas tordus en hélice, peuvent s'étaler le long de cette nervure rectiligne 39. La meilleure répartition des filaments sur la nervure 39, qui constitue la surface d'appui lors du soudage du fil 10 sur le substrat 7, permet de rendre la soudure plus homogène et de réduire ainsi sensiblement l'effet de "boulochage". Cette variante est donc particulièrement intéressante pour la fabrication de tapis de type moquette dont l'usure résulte essentiellement de ce phénomène de "boulochage". Par ailleurs, cette variante présente tous les autres avantages susmentionnés de l'invention.

**Revendication**

1. Procédé pour un substrat(7), de fils (10) soudés par ultransons, ces fils et ce substrat étant au moins partiellement en matériau thermoplastique, selon lequel on place ce substrat (7) visà-vis d'une soudage (1), on amène des portions desdits fils en contact avec la portion de ce substrat placée vis-à-vis de cette sonotrode, on presse ces portions de substrat et de fils en contact contre la sonotrode (1) reliée à une source d'excitation (2) pour leur transmettre les variations de pressions ultrasoniques aptes à créer entre elles une fusion localisée et on relâche cette pression pour déplacer le substrat (7) et effectuer un soudage d'une autre portion de ces fil )10) sur une autre portion de sa surface et ainsi de suite jusqu'à recouvrement du substrat, caractérisé par le fait que l'on disposeladite sonotrode (1) adjacente au revers du substrat (7), que l'on fait passer chacun desdits fils (10) à travers un conduit de guidage dont l'extrémité de sortie comporte une surface 'appui faisant face à la sonotrode (1), que l'on anime ces conduits de guidage (5, 18, 37) de mouvements alternatifs selon une direction sensiblement perpendiculaire à la face de transmission des vibrations de la sonotrode pour amener ne ces surfaces d'appui périodiquement en contact élastique avec la portion de l'avers du substrat passant sur ladite face de transmission des vibrations de la sonotrode afin d'appliquer cette portion du substrat (7) e celle de chacun desdits fils (10) sortant des extrémités respectives desdits conduits (5, 18, 37) contre ladite sonotrode.

2. Procédé selon la revendication 1 caractérisé par le fait quel'on forme ladite surface d'appui en ménageant à proximité de chacune de ces extrémités de sortie une nervure rectiligne (39) qui fait saillie du plan contenant l'extrémité de sortie de chaque conduit (37) est orientée transversalemen à la direction de déplacement du substrat (7) et fait suite à cette extrémité sortie par rapport au sens de déplacement du substrat.

3. Procédé selon la revendication 1, caractérisé par le fait que l'on répartit cas surfaces d'appui adjacentes aux extrémités de sortie des conduits de guidage (5, 18, 37) selon une direction générale transversale au sens de déplacement du substrat (7) alternativement selonau moins deux transversaux, dont l'écartement est différent d'un multiple entier du pas séparant deux soudures successives du même fil )10) sur le substrat (7).

4. Procédé selon l'une des revendications 1, caractérisé parle fait que l'on déplace transversalement lesdits conduits de guidage (5) dans un sens, dans l'intervalle séparant deux mises en contact successives de leurs surfaces d'appui avec la portion de l'avers dusubstrat (7) passant sur la sonotrode (7) puis que l'on déplace transversalement ces conduits de guidage (5) dans l'autre sens, dans l'intervalle séparant la mise en contact suivante de leurs surfaces d'appui avec la portion de l'avers du substrat (7) passant sur la sonotrode (1) et ainsi de suite.

5. Procédé selon la revendication 4, caractérisé par le fait que l'on fait passer chaque fil )10) entre deux mises en contact successives avec le substrat (7) au-dessus d'un guide (28a) dont la hauteur correspond à celle désirée pour les boucles de fil.

6. Procédé selon la revendication 1, caractérisé par le faitque l'on communique auxdits conduits de guidage (5, 18, 37) un mouvement alternatif, dont l'amplitude est supérieure à la longueur du déplacement communiqué au substrat (7) entre deux mises en contact successives desdites surfaces d'appui et fonction de la hauteur de boucle désirée et que l'on forme un écoulement d'air parallèle au sens de déplacement du substrat (7) que l'on dirige contre les portions de fils s'étendant entre le substrat et les extrémités de sortie des conduits de guidage.

7. Procédé selon la revendication 5 caractérisé par le fait que l'on insère un fil (30) longitudinalement au substrat, le long chacun desdits guides (28a sous les boucles en formation.

8. Procédé selon la revendication 5, caractérisé par le fait que l'on coupe les boucles formées sur le guide (28a) au fur et à mesure que ces boucles quittent ce guide.

9. Machine pour la mise en oeuvre du procédé selon la revendication 1, comprenant des moyens (8, 9) pour faire défiler le substrat (7) une matrice (4, 34) de conduits de guidage (5, 18, 37) de fils, cette matrice de conduits de guidage étant disposée transversalement à la direction de défilement de ce substrat (7) et étant en prise avec des moyens de guidage (6) définissant une translation de cette matrice (4, 34) et avec des moyens d'entraînement (12, 13, 14, 15) pour l'animer d'un mouvement de va-et-vient par rapport aux moyens de guidage et amener successivement les extrémités de sortie des conduits de guidage (5, 18, 37) a proximité d'une portion du substrat (7) et un poste de soudage comprenant une sonotrode (1) et des moyens d'appui, qui sont disposés de part et d'autre de cette portion du substrat (7) et des moyens d'excitation (2) de cette sonotrode (1) pour la faire vibrer à une fréquence acoustique apte à chauffer le matériau thermoplastique à sa température de fusion lorsqu'il es pressé entre cette sonotrode et ces moyens d'appui, caractérisée par le fait que ces moyens de guidage (6) en translation sont orientés perpendiculairement à la surface d'application des vibrations acoustiques de la sonotrode (1) et que lesdits moyens d'appui sont formés de surfaces d'appui situées aux extrémités de sortie desdits conduits de guidage (5, 18, 37) respectifs, qui sont montés sur ladite matrice ((4, 34) par l'intermédiaire d'éléments élastiques de suspension (16, 19) agissant au moins dans le sens de la course de la matrice amenant ces surfaces k'appui contre la surface de transmission des vibrations de la sonotrode (1).

10. Machine selon la revendication 9, caractérisée par le fait que les surfaces d'appui sont réparties sur la matrice (4, 34) alternativement le long d'au moins deux axes parallèles transversaux à la direction de défilement dudit subetrat (1).

11. Machine selon la revendication 9, caractérisée par le fait que les éléments de suspension (19) agissent dans les deux sens de la course et par des moyens de sélection (22) pour limiter la course de recul de chaque conduit de guidage (18) à une valeur prédéterminée en fonction de la longueur des boucles désirée.

**Pantentansprüche**

1. Verfahren zum Überziehen eines Substrats (7) mit durch Überschall zusammengeschweißten Fäden (10), wobei diese-Fäden und dieses Substrat zumindest teilweise aus thermoplastischem Material bestehen, wonach man dieses Substrat gegenüber einer Sonotrode (1) zum Schweißen anordnet, man Abschnitte dieser Fäden in Berührung mit dem Abschnitt dieses Substrats bringt, der gegenüber dieser Sonotrode angeordnet ist, man diese Abschnitte des Substrats und der Fäden in Berührung gegen die Sonotrode (1) drückt, die an eine Erregerquelle (2) angeschlossen ist, um ihnen die Überschall-Druckveränderungen zu übermitteln, die geeignet sind, zwischen ihnen eine örtlich begrenzte Verschmelzunq zu vollziehen, und man diesen Druck lockert, um das Substrat (7) weiterzuschieben und ein Verschweißen eines anderen Abschnitts dieser Fäden auf einem anderen Abschnittseiner Oberfläche durchzuführen und so weiter, bis das gesamte Substrat überzogen ist, dadurchgekennzeichnet, daß man die Sonotrode (1) nahe der Rückseite des Substrats (7) - anordnet; daß man jeden der Fäden (10) durch einen Fadenführer (5, 18,37) laufen läßt, dessen Austrittsende eine Auflagefläche aufweist, die der Sonotrode (1) gegenüberliegt;, daß man diese Fadenführer (5,18,37) mit Alternativbewegungen entsprechend einer im wesentlichen senkrecht zur Übertragungsfläche der Schwingungen der Sonotrode verlaufenden Richtung anregt, um diese Auflageflächen periodisch in federnde Berührung mit der Vorderseite des Substrats zu bringen, das auf der Übertragungsfläche für die Schwingungen der Sonotrode vorbeiläuft, um diesen Abschnitt des Substrats (7) und denjenigen eines jeden Fadens (10), der aus den entsprechenden Enden der Fadenführer (5,18,37) austritt, gegen die Sonotrode (1) zu drücken.

2. Verfahren nach Anspruch 2, dadurchnekennzeichnet, daß man die Auflageflächen bildet, indem man nahe einem jeden dieser Austrittsenden eine geradliniqe Rippe (39) anordnet die auf der das Austrittsende eines jeden Fadenführers(37 enthaltenden Ebene aufliegt, quer zur Verschiebungsrichtung des Substrats (7) ausgerichtet ist und diesem Austrittsende in bezug auf die Verschiebungsrichtung des Substrats folgt.

3. Verfahren nach Anspruch 1, dadurchgekennzeichnet, daß man diese Auflageflächen, die angrenzend an die Austrittsenden der Fadenführer (5,18,37) in einer im allgemeinen quer zur Richtung der Verschiebung des Substrats verlaufenden Richtung abwechselnd entsprechend mindestens zweier Querachsen angeordnet sind, deren Abstand sich um ein qanzes Vielfaches des zweiaufeinanderfolgende Schwei-ßungen des gleichen Fadens (10) auf dem Substrat (7) trennenden Schrittes unterscheidet, aufteilt.

4. Verfahren nach einem der Ansprüche 1, dadurch qekennzeichnet, daß man die Fadenführer (5) quer in einer Richtung in dem Abstand verschiebt, der zwei aufeinanderfolgende Berührungspunkte ihrer Auflageflächen mit dem Abschnitt der Vorderseite des Substrats (7) voneinander trennt, welcher über die Sonotrode (1) läuft:. daß man dann diese Fadenführer (5) in der anderen Richtung in dem Abstand verschiebt, der den folqenden Berührungspunkt ihrer Auflageflächen mit dem Vorderabschnitt des Substrats (7) trennt, welcher über die Sonotrode (1) verläuft, und so in der Folge weiter.

5. Verfahren nach Anspruch 4, dadurchgekennzeichnet, daß man jeden Faden (10) zwischen zwei aufeinanderfolgenden Berührunqspunkten mit dem Substrat (7) oberhalb einer Führung (28a) laufen 1äßt, deren Höhe der für die Fadenschlingen gewünschten entspricht.

6.Verfahren nach Anspruch 1, dadurchgekennzeichnet, daß man den Fadenführer (5,18,37) eine Alternativbewegung erteilt, deren Amplitude über der dem Substrat (7) erteilten Verschiebungslänge zwischen zwei aufeinanderfolgenden Berührungspunkten der Auflageflächen lieqt und die eine Funktion der Höhe der qewünschten Schlindenhöhe ist, und daß man einen Luftabfluß bildet parallel zur Verschiebungsrichtung des Substrats (7), welchen man gegen die Fadenabschnitte richtet, die sich zwischen dem Substrat und den Austrittsenden der Fadenführer erstrecken.

7. Verfahren nach Anspruch 5, dadurchgekennzeichnet, daß man einen Faden (30) in Längsrichtung zum Substrat entlang einer jeden der Führungen (28a) der in Bildung . befindlichen Schlingen einfädelt.

8. Verfahren nach Anspruch 5, dadurchgekennzeichnet, daß man die auf der Führung (28a) geformten Schlingen in der Weise abschneidet, wie sie diese Führung verlassen.

9. Maschine zur Verwendung des Verfahrens nach Anspruch 1 mit Mitteln (8,9), um das Substrat (7) ablaufen zu lassen; einer Matrize (4,34) für Fadenführer (5,18,37), wobei diese Matrize für Fadenführer quer zur Richtung des Ablaufs dieses Substrats (7) und in Eingriff mit Führungsmitteln (6) angeordnet ist, die eine Translation dieser Matrize (4, begrenzen, und mit Mitnahmemitteln (12,13,14,15), um sie zu einer Hin- und Herbewegung in bezug auf die Fadenführer zu bewegen und nacheinander die Austrittsenden der Fadenführer (5,18,37) nahe einem Abschnitt des Substrats (7) zu führen, und mit einem Schweißgerät mit einer Sonotrode und Auflagemitteln, die auf beiden Seiten dieses Abschnitt des Substrats (7) angeordnet sind, sowie mit Erregermitteln (2) für diese Sonotrode (1), um sie mit einer akustischen Frequenz schwingen zu lassen, die geeignet ist, das thermoplastische Material auf seine Fusionstemperatur zu erhitzen, während es zwischen dieser Sonotrode und diesen Auflagemitteln gepreßt ist, dadurchgekennzeichnet, daß diese Führungsmittel (6) in geradliniger Bewegung senkrecht zur Anlegefläche der akustischen Schwingunqen der Sonotrode (1) ausqerichtet sind, und daß die Auflagemittel von Auflageflächen gebildet werden, die an den Austrittsenden der entsprechenden Fadenführer (5,18,37) liegen, welche auf der Metrize (4,34) mittels federnder Aufhängeglieder (16,19) aufmontiert sind, die mindestens in der Richtung des Weges der Matrize wirken, die diese Auflageflächen gegen die Übertragungsfläche der Schwingungen der Sonotrode (1) führen.

10. Maschine nach Anspruch 9, dadurchgekennzeichnet, daß die Auflaqeflächen über die Matrize (4,34) alternativ entlang mindestens zwei paralleler Achsen verteilt sind, die quer zur Laufrichtung des Substrats (7) laufen.

11. Maschine nach Anspruch 9, dadurch gekennzeichnet, daß die Aufhängeglieder (19) in den beiden Bewegungsrichtungen und mit Hilfe einer Auswahleinrichtung (22) wirken, um den Rücklaufweg eines jeden Fadenführers auf einen vorbestimmten Wert als Funktion der Länge der gewünschten Schlingen zu begrenzen.


**Claims**

1. Process for coating a substrate (7) with ultrasonically welded filaments (10), these filaments an this substrate being made at least in part of a thermoplastic material, according to which this substrate (7) is placed in facing relation with a welking sonotrode (1), portions of said filaments are brought into contact with the portion of this substrate facing this sonotrode, these portions of substrate and these filaments are pressed into contact against the sonotrode (1) connected to an excitation source (2) so as to transfer thereto ultraconic pressure variations capable of providing therebetween a local melting effect and this pressure is released when the substrate (7) is displaced and the welding of another portion of these filaments (10) is effected on another portion of its surface, and so on until substrate is fully coated, characterized in that said sonotrode (1) is located on the back-side of the substrate (7), that each of said filaments (10) is threaded through a guiding duct (5, 18, 37) of which öthe output end comports a rest surface facing the sonotrode (1), that these guiding ducts are alternatively moved in a direction substantially perpendicular to the face of the sonotrode transmitting vibrations to periodically bring these rest surfaces into elastic contact with that portion of the back-side of the substrate that passes over said face of the sonotrode for transmitting vibrations so as to apply this portion of the substrate (7) an that of said filaments (10) exiting from the respective ends of said ducts (5, 18, 37) against said sonotrode (1).

2. Process according to claim 1, characterized in that said rest surface is formed by providing close to each of these output ends a rectilinear rib (39) which protrudes from the plane containing the output end of each duct (37), which is oriented transversely to the direction of displacement of the substrate (7) and which is located as a continuation of this output end with regard to the didrection or displacement of the substrate.

3. Process according to claim 1, characterized in that these rest surfaces adjacent to the output ends of the guiding ducts (5, 18, 37) are distributed according to a general transverse direction relative to the direction of the substrate (7) displacement, alternatively, aocording to at least two transversal axis whose separation is different from an integral multiple of the pitch distance between two successive welding spots of the same filament (10) on the substrate (7).

4. Process aocording to claim 1, characterized in that said guiding ducts (5) are displaced transversally in one direction, during the period separating two successive contacting of the rest surface thereof with the portion of the back-side of the substrate (7) passing over the sonotrode (1), then these guiding ducts (5) are displaced in the reverse direction during the period separating the next contacting of the rest surface thereof with the portion of the backside of the substrate (7) passing over the sonotrode (I), and so on.

5. Process aocording to claim 4, characterized in that, in between two successive contacting with the substrate (7), each filament (10) is caused to pass over a guide (28a) whose height corresponds to that, desired, for the filament loops.

6. Process according to claim 1, characterized in that the amplitude of the alternating displacement to which said guiding ducts (5, 18, 37) are subjected exceeds the length of displacement of the substrate (7) between two successive contacting of said rest surfaces and is a function of the desired loop height, and in that an air flow parallel to the direction of displacement of the substrate (7) is formed and direoted against the filament portions which extend between the substrate and the output ends of the guiding ducts.

7. Process aocording to claim 5, characterized in that a filament (30) is inserted longitudinally relative to the substrate, along each of said guides (28a), below the loops under formation.

8. Process according to claim 5, characterized in that the loops formed on the guide (28a) are cut when leaving progressivelv this guide.

9. Machine for carrying out the process aocording to claim 1, comprising means (8,9) for displacing the substrate (7), a matrix (4, 34) of filament guiding ducts (5, 18, 37), this matrix of filament guiding ducts being arranged transversally to the direction of displacement of this substrate (7) and being in engaging relation with guiding means (6) defining a translation path of this matrix (4, 34) and with driving means (12, 13, 14, 15) for imparting there to a movement to-and-fro relative to the guiding means and to successively bring the output ends of the guiding means (5, 18, 37) close to a portion of the substrate, and a welding unit comprising a sonotrode (1) and rest means disposed on both sides of this portion of the substrate (7) and excitation means (2) of this sonotrode (1) for enabling it to vibrate at a sonic frequency adapted to heat the thermo-plastic material to its melting point when it is squeezed between this sonotrode and these rest means, characterized in that these guiding means (6) under translation motion are oriented perpendicularly to the surface to which the sonic vibrations of the sonotrode (1) are applied and that the rest means are formed from rest surfaces located at the output ends of said respective guiding ducts (5, 18, 37) which are mounted on said matrix (4, 34) by means of elastic retaining elements (16, 19) operating in at least the direction of the excursion of the matrix bringing these rest surfaces against the surface for transmitting the sonotrode vibrations.

10. Machine according to claim 9, characterized in that the rest surfaces are distributed, in turn, on the matrix (4, 34) along at least two transverse axis parallel to the direction of displacement of said substrate (1).

11. Machine according to claim 9, characterized in that said retaining elements (19) operate in the two directions of the excursion and by selection means (22) for limiting the recoil excursion of each guiding duct (18) to a predetermined value, the latter depending on the desired length of the loops.

FIG. 1

FIG. 2

FIG. 3

FIG. 4

FIG. 5

FIG.6

FIG.7

FIG.8

FIG.9

FIG. 10

FIG. 11